# EUROPEAN PATENT APPLICATION

(11) **EP 1 104 735 A1**
(43) Date of publication of application: **06.06.2001**
(21) Application number: 99925359.4
(22) Date of filing: 17.06.1999
(51) Int. Cl.: B61L 19/06, G05B 9/03

(54) **MULTIPLE SYSTEM PROCESSOR, CONTROLLER CONNECTED TO MULTIPLE SYSTEM PROCESSOR, AND MULTIPLE SYSTEM PROCESSING SYSTEM**

(30) Priority: 19.06.1998 JP 17250998
(71) Applicant: Hitachi, Ltd., Chiyoda-ku, Tokyo 101-8010 (JP)
(72) Inventor: KAWABATA, Atsushi Hitachikenkyusho, Hitachi, Ltd., Hitachi-shi Ibaraki 319-1221 (JP); FUJIWARA, Michio Mitokojo, Hitachi, Ltd., Hitachinaka-shi Ibaraki 312-0033 (JP); SATO, Hiroyasu Mitokojo, Hitachi, Ltd., Hitachinaka-shi Ibaraki 312-0033 (JP); WATANABE, Dai Hitachikenkyusho, Hitachi, Ltd., Hitachi-shi Ibaraki 319-1221 (JP); OGUMA, Kenji Hitachikenkyusho, Hitachi, Ltd., Hitachi-shi Ibaraki 319-1221 (JP); TOYODA, Hiroyuki Hitachikenkyusho, Hitachi, Ltd., Hitachi-shi Ibaraki 319-1221 (JP); SATO, Hiroshi Hitachikenkyusho, Hitachi, Ltd., Hitachi-shi Ibaraki 319-1221 (JP)
(74) Representative: Strehl Schübel-Hopf & Partner
(86) International application number: JP9903235
(87) International publication number: WO9965754

(57) **Abstract**

A multiple system processor adaptable to a large railroad station and having a short execution time without endangering safety and without increasing the amount of wiring between the multiple system processor and a controller. The multiple system processor comprises processing units each receiving the same input, performing the same processing, and generating and outputting the processing results. A given processing unit out of the processing units serves as a main processing unit, and the others as slave ones. The main processing unit comprises a collecting section for collecting the processing results outputted from the main and slave processing units and an output section for outputting the collected processing results to the controller.

## Description

### TECHNICAL FIELD

The present invention relates to a multiple system processor which allows a plurality of processing units to perform the same processing and, based on the processing results of the processing units, controls units performing controlled operation. More particularly, the present invention relates to a multiple system processor and a multiple system processing system which efficiently transfer data to railroad train controllers including railroad signals and railroad switches requiring high reliability.

### BACKGROUND ART

A processing system used in the railroad area receives information on "train positions", "railroad switch state", and "signal state" to control the controller of the signals and railroad switches and controls them based on their relations. The system is functionally comprises (1) processing units which acquire information on train positions and railroad switch settings, check the interrelation of the acquired information, and send railroad switch operation instructions and signal control instructions to the controller based on the check results and host system instructions, and (2) a controller which controls the power for operating the railroad switches and for turning on the signal lights according to the instructions sent from the processing units.

The controller which switches signals and railroad switches, as well as the processing units which issue instructions to the controller, requires safety and high reliability. This is because an error may lead directly to a railroad accident. At the same time, the system is designed basically around the concept of 'a fail safe system" which, if a system error occurs, stops the system in a safe state. To implement fail safe processing units or controllers such as signals, the processing units are usually configured in a multiple-system configuration. The safety of processing units in a multiple-system configuration is ensured by the concept that "the probability at which a plurality of computers fail at the same time and create the same incorrect information is very low."

To issue a control instruction based on the outputs from the processing units in a multiple-system configuration, a plurality of outputs from the processing units in the multiple-system configuration must be combined into one and its validity must be guaranteed. The prior art based on this concept is described, for example, in "New Information Transmission between Electronic Driven Units and Field Apparatus: 29th domestic symposium paper on cybernetics usage in railroads" by Iwamoto et. al., pages 499-503, 1992 (first prior art). This publication discloses a technology for safety information transmission between interlocked logic units (multiple system processors) and a signal controller whose fail safety is guaranteed. This prior art is that the main processing unit, one of processing units in the multiple-system configuration, outputs a control instruction to the signal controller and slave processing units. In response to this control instruction, the salve processing units perform control registration to check the validity of control data. At the same time, the signal controller sends the received instruction back to the processing units. Upon receiving the control instruction from the signal controller, the processing units verify the validity of the control instruction. If there is no problem, the main processing unit requests the signal controller to start control operation based on the control instruction previously sent to the signal controller. This prior art guarantees safety because control is executed only after all systems confirm that the control instruction created by the main processing unit has been sent to the signal controller. This prior art requires several distributing wires between the multiple system processors and the controller.

A second prior art is described in "Development of Compact Electronic Driven Units Considering Continued Usage Conditions at Error Time" by Kawabata et. al., Institute of Electrical Engineers of Japan paper D, pages 1348-1356, 1997. This publication discloses a technology in which the processing units in the multiple-system configuration issue control instructions via parallel lines composed of bits each corresponding to a signal or a railroad switch on a bit-by-bit basis. The signal controller receives this control instruction and controls railroad switches and signals under majority rule. The controller according to this art seeks safety by using majority outputs from a plurality of processing units, eliminating the need for a two-level control operation. This prior art usually requires hundreds of distributing wires between the multiple system processor and the controller.

In the first prior art described above, even when a control instruction is sent from the multiple system processor to the controller, a two-stage control operation, i.e., control registration and control execution, is necessary to actually control the signal controller. This requires a longer execution time for signal operation. In the second prior art described above, the processing units in the multiple-system configuration and the signal controller are connected by a parallel line with the number of bits equal to the number of signals and railroad switches. The more the units that must be controlled, the more the distributing wires. Therefore, this prior art may be applied only to a station with a small number of controlled units.

That is, the two-stage control operation according to the first prior art requires fewer distributing wires but longer processing time, while the method according to the second prior art in which the signal controller decides the operation by majority requires less time but more distributing wires.

### DISCLOSURE OF THE INVENTION

It is an object of the present invention to provide a multiple system processor adaptable to a large railroad station and having a short execution time without endangering safety and without increasing distributing wires between the multiple system processor and the controller.

To solve the above problems, a multiple system processor according to the present invention is composed of a plurality of processing units each receiving the same input, performing the same processing, and producing and outputting a processing result, wherein one of the plurality of processing units acts as a main processing unit with others as slave processing units, and wherein the main processing unit comprises a collecting section which collects processing results of the main processing unit and the slave processing units and an output section which outputs the processing results collected by the collecting section to a controller. In this way, the number of distributing wires used by the main processing unit to output the processing results of the slave processing units and the main processing unit to the controller may be reduced. In addition, the multiple system processor with a configuration in which the controller judges the majority or the identity requires a data transmission timer shorter than that required by a two-stage control configuration.

The processing units of the multiple system processor according to the present invention each have a unique encoding key by which data is encoded before being sent to the main processing unit. The main processing unit encodes its own data with its own encoding key, combines the encoded data with the encoded data from the slave processing units, and outputs it. The processing unit which receives data has all decoding keys, decodes the data with the keys, and performs decision-by-majority or identity operation. In this case, whatever error occurs in the main processing unit, it cannot consistently alter data received from the slave processing units unless the encoding keys of the slave processing units are obtained. Safety is therefore assured.

### BRIEF DESCRIPTION OF THE DRAWINGS

Fig. 1 is a diagram showing the basic configuration of a multiple system processor according to the present invention.

Fig. 2 is a diagram showing the contents of processing (operation) of each processing unit of the multiple system processor.

Fig. 3 is a diagram showing the contents of processing (operation) of each processing unit of the multiple system processor.

Fig. 4 is a diagram showing the processing procedure of a controller according to the present invention.

Fig. 5 is a diagram showing the processing procedure of a controller according to the present invention.

Fig. 6 is a diagram showing the details of the multiple system processor according to the present invention.

Fig. 7 is a diagram showing the configuration of an error diagnostic unit according to the present invention.

Fig. 8 is a diagram showing the format of data transferred between the multiple system processor and the controller according to the present invention.

Fig. 9 is a diagram showing the configuration of data sent from the multiple system processor to the controller according to the present invention.

Fig. 10 is a diagram showing the format of display data used in the present invention.

Fig. 11 is a diagram showing the processing flow of a main processing unit according to the present invention.

Fig. 12 is a diagram showing the processing flow of a slave processing unit according to the present invention.

Fig. 13 is a diagram showing the processing flow of the slave processing unit according to the present invention.

Fig. 14 is a diagram showing the processing flow of the main processing unit according to the present invention.

### BEST MODE FOR CARRYING OUT THE INVENTION

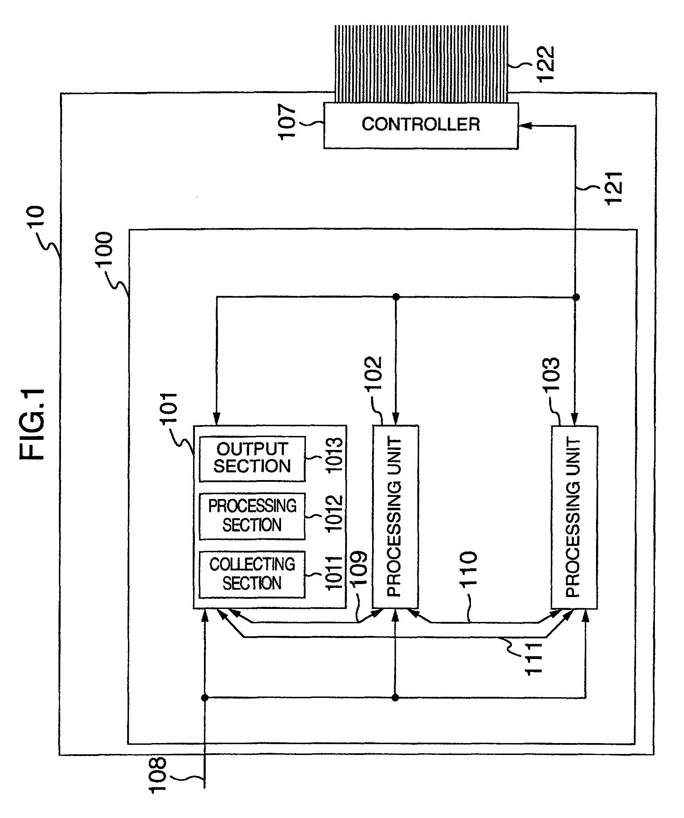

The basic configuration used in the present invention will be described in detail with reference to FIG. 1.

FIG. 1 shows a multiple-system processing system to which the present invention is applied. A multiple system processor 100 comprises a plurality of processing units 101-103 each of which receives, via a line 108, a control request from a host system not shown in the figure for controlling signals or railroad switches, performs the same processing (operation), and output a processing result.

A controller 107, which controls signals, railroad switches, and track circuits connected to the controller 107, receives processing results from the multiple system processor 100, and actually controls the signals and switches according to the received processing results.

The multiple system processor 100 and the controller 107 are connected by a line 121 over which data and information are transferred. It is also possible to consider that, as shown by the numeral 10, the multiple system processor 100 and the controller 107 connected by the line 121 are combined into a multiple system processing system 10. The line 108 is also used to send various types of sensor information on signals, railroad switches, and track circuits from the multiple system processor 100 back to the host system.

Next, the processing units 101-103 constituting the multiple system processor 100 will be described.

The processing units 101-103 constitute the multiple system processor 100. The processing units 101-103 each have functionally the same function. That is, each of the processing units 101-103 receives input (control request from the host system for switching signals or railroad switches) from the host system over the line 108 and performs the same processing (operation) to produce a processing result.

The operation of the basic configuration according to the present invention will be described.

According to the present invention, one of the processing units 101-103 constituting the multiple system processor 100 acts as a main processing unit with the others as slave processing units. The main processing unit may be selected by the operator or switched (selected) at regular intervals by a timer or some other time-measuring unit.

In FIG. 1, the processing unit 101 is selected as the main processing unit, and the rest of the processing units, 102 and 103, are slave processing units.

Each processing unit, main or slave, receives a control request from the host system, performs the same processing which will be described later via a processing section 1012, and outputs a processing result.

Then, the slave processing units 102 and 103 send their processing results to the main processing unit.

The main processing unit 101 collects, via a collecting section 1011, the processing results sent from the slave processing units 102 and 103 and its own processing result. An output section 1013 outputs the processing results of the processing units to the controller 107 via the line 121. More specifically, the multiple system processor 100 outputs instructions such as a railroad switch shifting instruction or a signal control instruction.

Upon receiving the output from the multiple system processor 100, the controller 107 creates a signal or railroad-switch control instruction through decision-by-majority operation, which will be described in detail later, based on the received processing results. The controller then outputs the control instruction over a parallel line 122 via which the field units, such as railroad switches or track circuits not shown in the figure, are connected. That is, the controller outputs information such as track circuit information. This configuration eliminates the need for the controller 107 to check if the multiple system processor 100 has issued a control instruction, thus reducing the processing time. In addition, this configuration requires fewer lines because the main processing unit 101 of the multiple system processor 100 collects the processing results of the processing units.

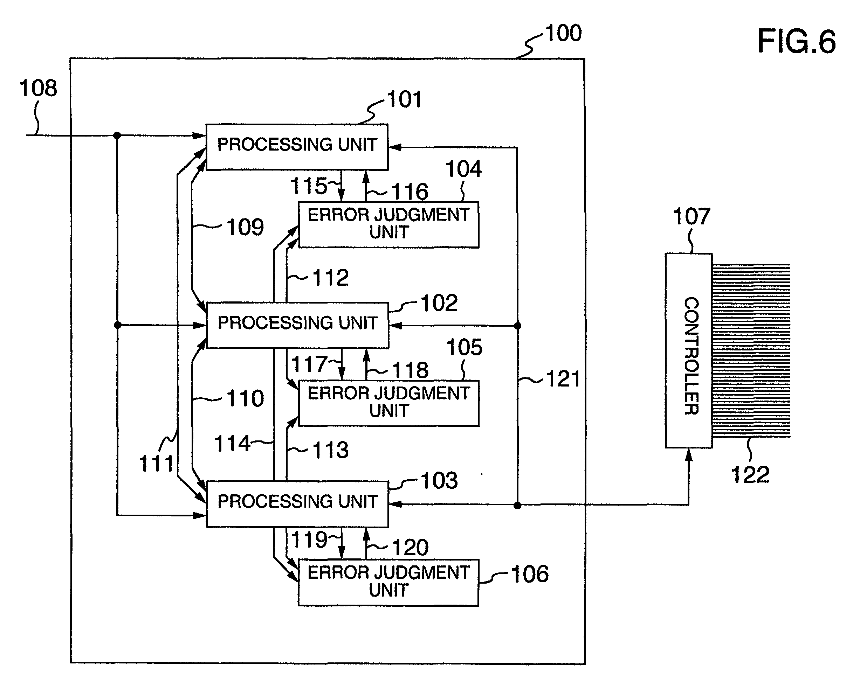

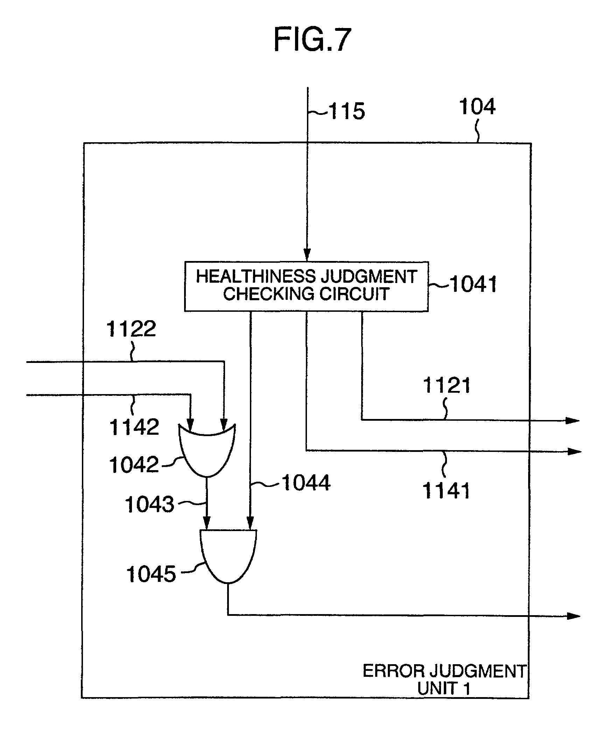

The processing units 101-103 exchange information among themselves to check if they are operating normally. This information allows the processing units to check which processing unit is failing. Information about whether or not the processing units are operating normally or whether or not some of them has failed is added to the processing results before they are sent to the controller to achieve a more precise control. Error checking made through exchanging this information will be detailed later by referring to FIGS. 6 and 7.

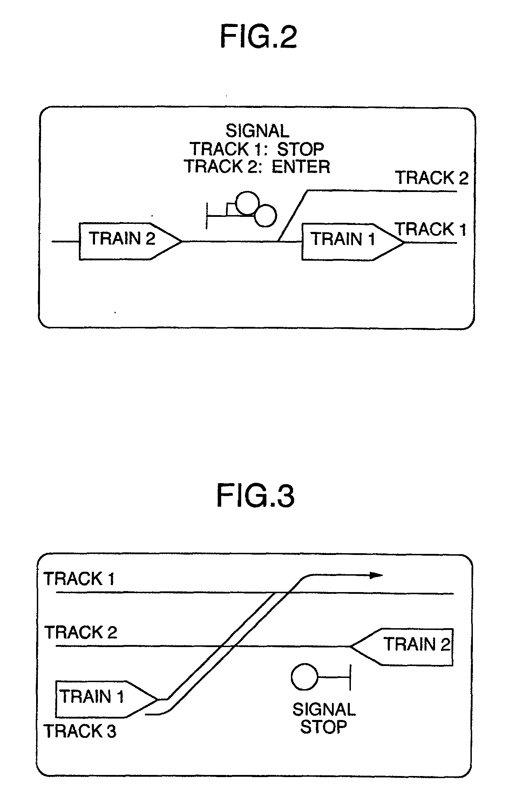

Next, processing (operation) that is performed by the processing units of the multiple system processor 100 will be described with reference to FIGS. 2 and 3.

Each processing unit of the multiple system processor 100 has received, in advance, information on "train position", "railroad switch state", and 'signal state" from the controller 107 via the line 121. Based on this received information and a control request received from the host system, the processing unit outputs a control instruction to the controller.

This processing is described below more in detail. In response to an entry-track setting request (control request) from the host system via the line 108 indicating that train 2 shown in FIG. 2 will enter track 1, the multiple system processor 100 checks the information received in advance from the controller 107 and outputs the result indicating that 'the stop signal must be given to avoid collision because another train is already in track 1." In response to an entry-track setting request (control request) from the host system indicating that the train will enter track 2, the multiple system processor checks the information received in advance and outputs the result indicating that "entry is permitted because no train is in track 2." In FIG. 3, in response to an entry-track setting request (control request) from the host system indicating that train 2 will enter track 2, the multiple system processor 100 checks the information received in advance and outputs the result indicating that "the train cannot enter track 2 and the stop signal must be given because the railroad switch in the direction of entry has already been reserved for train 1."

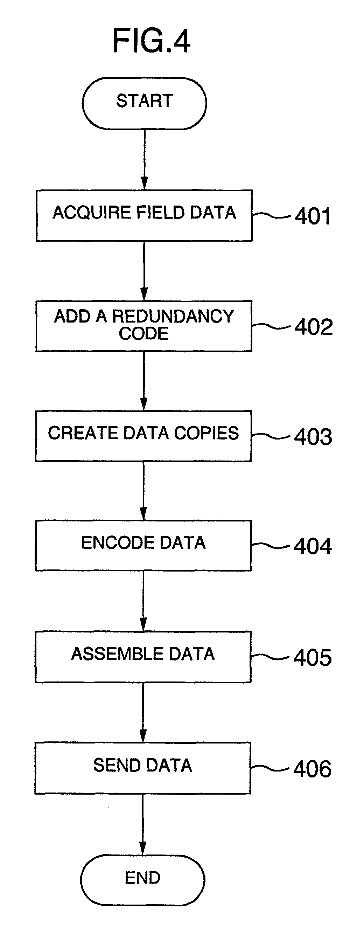

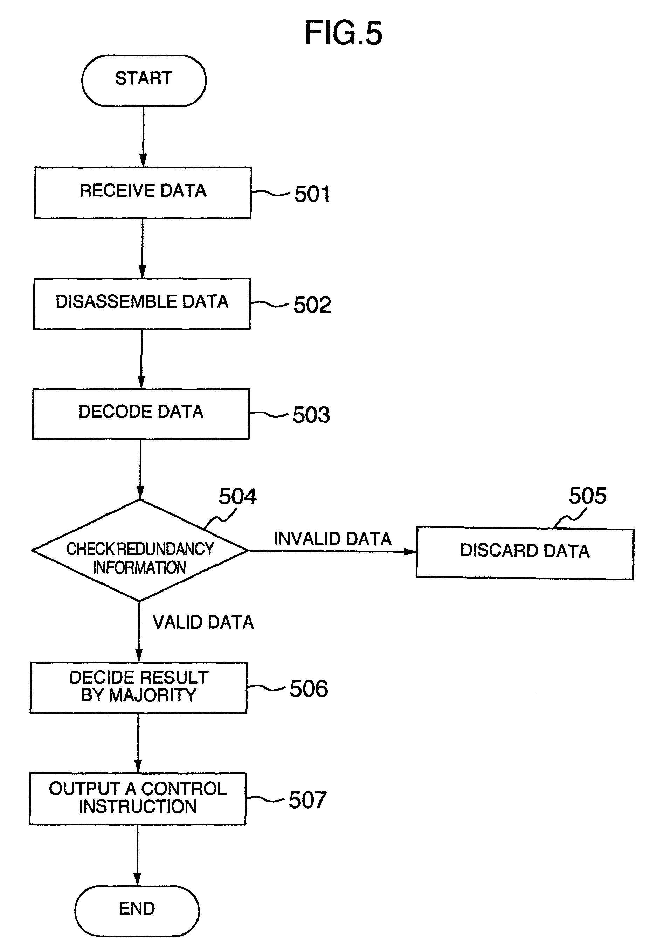

Processing performed by the controller 107 will be described with reference to FIGS. 4 and 5.

First, referring to FIG. 4, the following describes how the controller sends data to the multiple system processor 100. The processing units 101-103 of the multiple system processor 100 will use this data for their processing.

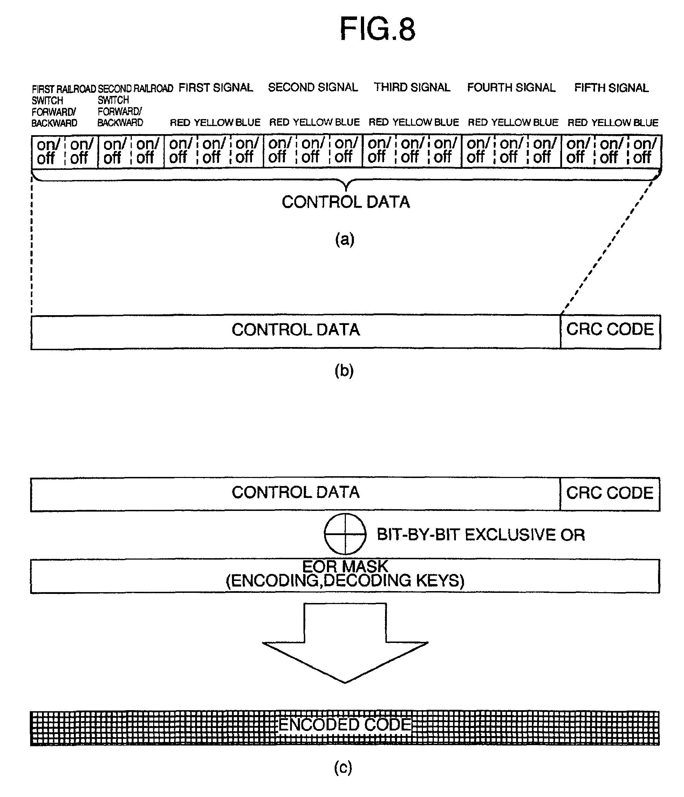

The controller 107 acquires, via the distributing wire 122, data from the field units, such as signals, railroad switches, and control circuits, connected to the controller 107 by the distributing wire 122 (step 401), adds a redundancy code to the acquired data (step 402), and creates three copies of the data (step 403). Then, the controller encodes the three sets of data using encoding keys each corresponding to one of the processing units 101-103 (step 404), adds configuration information to assemble the data into the format shown in FIG. 8(c) (step 405), and transfers the data to the main processing unit 101 of the multiple system processor 100. The controller 107 creates the number of copies equal to the number of processing units of the multiple system processor to prevent the main processing unit 101 of the multiple system processor 100 from altering the data sent to the main processing unit 101.

Next, referring to FIG. 5, the following describes how the controller processes processing results sent from the main processing unit 101 of the multiple system processor 100.

The controller receives processing results sent from the multiple system processor 100 (step 501) and disassembles the processing results into those for each processing unit (step 502). Next, the controller decodes data with decoding keys each corresponding to one of the processing units 101-103 (step 503) to check the redundancy code of each processing result (step 504). The processing result for which an error was detected as a result of checking is discarded (step 505), while the processing result for which an error was not detected is processed as described below. For the processing result which has passed the checking described above, decision is made by majority for each bit to decide the final control information (step 506). Based on this result, the controller 107 outputs a control instruction to a signal, railroad switch, and control circuit connected to the controller 107 (step 507). In response to the control instruction from the controller 107, the signal turns on a signal light or the railroad switch shifts a train from one track to another.

Next, an example of error diagnosis made through mutual supervision among the processing units will be described.

In the system according to the present invention, the main processing unit collects data generated by all processing units of the multiple system processor and then sends the collected data to the controller. At the same time, the main processing unit sends operating status information on all processing units to the controller. Therefore, the controller sent from the multiple system processor knows how many sets of data will be sent from the multiple system processor and can immediately check the data through a decision-by-majority or identity operation. As compared with a configuration in which each processing unit of the multiple system processor individually transfers data to the controller, the configuration described above enables data to be transmitted orderly with no congestion and eliminates the need for the receiver to wastefully wait for data from a failed processing unit.

It should be noted that the safety of the multiple system processor described in this specification is ensured by the fact that all processing units confirm that they perform the same processing. For example, all processing units of the multiple system processor make a judgment in parallel that a contact is ON, and their results also match. This identity in operation is checked by exchanging input/output data or intermediate data.

However, transmission of data collected from the slave processing units is done only by the main processing unit and no means is provided for guaranteeing that this operation is performed correctly. Therefore, in the worst case, the main processing unit incorrectly changes data received from the slave processing units and creates data that is consistent but incorrect. In such a case, the processing unit which has received data cannot detect an error through decision-by-majority or identify operation, resulting in incorrect control.

To solve this problem, an encoding technology must be introduced. To send encoded information, the receiver and the sender share a common key. The sender encodes information with the key, while the receiver decodes the encoded information with the key. This method not only prevents encoded information from being decoded even if the information leaks but also prevents data from being altered illegally. Because data cannot be altered, the receiver can identify the issuer of the data if it is legal. This feature ensures safety even if the legality of processing "in which the main processing unit collects data from the slave processing units and outputs it" is not guaranteed.

The following details this method.

FIG. 6 shows a configuration created by adding error judging units 104-106 for judging errors and a plurality of lines associated therewith are added to the basic configuration detailed in FIG. 1.

In FIG. 6, lines 109-111 are provided to allow the processing units 101-103 to exchange information among themselves and to check that the processing units are operating normally. Immediately after data or information is input to, or output from, each processing unit, the processing units 101-103 exchange input/output data among themselves via the lines 109-111 to confirm that the same data is input or output.

First, each time processing units 101-103 exchange data, they output temporary diagnostic results. For example, the processing unit 101 receives data and other information from the processing unit 102 and the processing unit 103 and then compares the received data with its own data. If all data matches, the judgment is that (processing unit 101 is normal, processing unit 102 is normal, processing unit 103 is normal); if the data of only the processing unit 103 differs from the data of its own, the judgment result is that (processing unit 101 is normal, processing unit 102 is normal, processing unit 103 is abnormal); if the data of only the processing unit 102 differs from the data of its own, the judgment result is that (processing unit 101 is normal, processing unit 102 is abnormal, processing unit 103 is normal); if the data of both the processing unit 102 and the processing unit 103 differs from the data of its own, the judgment result is that (processing unit 101 is normal, processing unit 102 is abnormal, processing unit 103 is abnormal). In addition, when data and other information are sent to the controller 107, the lines 109-111 are used to collect data in the main processing unit which will be described later and to exchange control data or observation data among processing units.

The error judging units 104-106 receive healthiness judgment information from the processing units 101-103 and, based on the information, check if any of the processing units 101-103 has failed.

The following describes in detail the operation of the error judgment unit 104.

The error judgment unit 104 receives healthiness judgment information from the processing unit 101 and exchanges the information with the error judgment units 105 and 106 to check whether or not the 101 has an error. For example, the healthiness judgment on the processing unit 101 is one of the following as described above: {(processing unit 101 is normal, processing unit 102 is normal, processing unit 103 is normal), (processing unit 101 is normal, processing unit 102 is normal, processing unit 103 is abnormal), (processing unit 101 is normal, processing unit 102 is abnormal, processing unit 103 is normal), and (processing unit 101 is normal, processing unit 102 is abnormal, processing unit 103 is abnormal). The error judgment unit 104 receives this information and sends information on the processing unit 102 to the error judgment unit 105, and information on the processing unit 103 to the error judgment unit 106. At the same time, the error judgment unit 104 receives information on the processing unit 101 from the error judgment unit 105 and the error judgment unit 106. That is, the error judgment unit 104 receives three judgment results: judgment on its own system made by the processing unit 101, judgment on the processing unit 101 made by the processing unit 102, and judgment on the processing unit 101 made by the processing unit 103. The error judgment unit 104 judges that the processing unit 101 is normal if two or more judgments indicate that the processing unit is normal; otherwise, the error judgment unit 104 judges that the processing unit 101 is abnormal. Then, the error judgment unit sends the judgment result to the processing unit 101. The processing unit 101 continues or stops the operation based on the judgment result. The error judgment units 105 and 106 perform the same processing as the error judgment unit 104. For example, consider a case in which the processing unit 101 is failing.

Assume that the processing unit 101 makes a temporary healthiness judgment that all units are normal. Because the processing units 102 and 103 are normal, they judge that the processing unit 101 is failing. The judgment results obtained by the processing units 101-103 are sent to the error judging units 104-106, where the following logical judgment is made:

### <Judgment made by error judgment unit 104>

Judgment on processing unit 101 made by processing unit 101: Normal

Judgment on processing unit 101 made by processing unit 102: Abnormal

Judgment on processing unit 101 made by processing unit 103: Abnormal

Because two processing units judge that the processing unit 101 is abnormal, it is judged by majority that the processing unit 101 is failing.

### <Judgment made by error judgment unit 105>

Judgment on processing unit 102 made by processing unit 101: Normal

Judgment on processing unit 102 made by processing unit 102: Normal

Judgment on processing unit 102 made by processing unit 103: Normal

Because three processing units judge that the processing unit 102 is normal, it is judged that the processing unit 102 is normal.

### <Judgment made by error judgment unit 106>

Judgment on processing unit 103 made by processing unit 101: Normal

Judgment on processing unit 103 made by processing unit 102: Normal

Judgment on processing unit 103 made by processing unit 103: Normal

Because three processing units judge that the processing unit 103 is normal, it is judged that the processing unit 103 is normal.

Lines 115, 117, and 119 are transmission lines over which information on the healthiness judgments on the processing units made by the processing units 101-103 is sent to the error judging units 104-106.

Lines 116, 118, and 120 are transmission lines over which information on the error judgments on the processing units made by the error judging units 104-106 is sent to the processing units 101-103.

Lines 112-114 are communication lines over which information on the healthiness judgments on the processing units made by the processing units 101-103 is exchanged via the error judging units 104-106.

The line 121 is a communication line over which railroad switch or signal control instructions created by the multiple system processor 100 is sent to the controller 107 or over which information on the controller 107 is sent to the multiple system processor 100.

Next, the internal configuration of the error judging units 104-106 will be described with reference to FIG. 7.

A healthiness judgment checking circuit 1041 shown in FIG. 7 divides healthiness judgment information on the processing unit 101 into information for each of the processing units 101-103.

Distributing wires 1044, 1121, and 1141 are distributing wires over which the healthiness judgment results of the processing units 101, 102, and 103 are transmitted, respectively. When it is judged that the processing unit is healthy, the ON signal flows; when it is judged that the processing unit is unhealthy, the OFF signal flows. The states of these signals are determined based on the result judged by the processing unit 101.

Both distributing wires 1122 and 1142 transmit the healthiness judgment results of the 101. When it is judged that the processing unit is healthy, the ON signal flows; when it is judged that the processing unit is unhealthy, the OFF signal flows. The signal that flows through the distributing wire 1122 is decided based on the result judged by the processing unit 102, while the signal that flows through the distributing wire 1142 is decided based on the result judged by the processing unit 103. The distributing wires 1121 and 1122 are those indicated as 112 in FIG. 6. In FIG. 7, the sending side and the receiving side are separated with the 112 divided into the 1121 for sending information and the 1122 for receiving information. Similarly, the distributing wires 1141 and 1142 are those indicated as 114 in FIG. 4. They are separated into the 1141 for sending information and the 1142 for receiving information.

A distributing wire 1042 is a circuit which receives signals from the distributing wires 1122 and 1142 and computes the logical sum. This circuit generates the ON output if the 102 and/or the 103 indicate that "the 101 is healthy."

A 1043 is a distributing wire via which the output of the 1042 is sent to a 1045. The healthiness judgment information on the 101 made by the 102 and the 103 flows through this wire.

The 1045 is a circuit which receives signals from the 1041 and 1042 and computes the logical product. The 1041 outputs the result of healthiness judgment on the 101 made by the 101 itself, while the 1042 outputs the result of healthiness judgment on the 101 made by the 102 and 103. The output of the 1045 is ON only if the 101 itself judges that the 101 is healthy and if the 102 and/or the 103 judges that the 101 is healthy. Otherwise, the output is OFF. The 104-106 decide the judgments of the processing units 101-103 by majority to execute the error checking of the 101-103.

One of the processing units 101-103 determined free of error becomes the main processing unit with the others as the slaves. As long as there is one slave, the 100 continues operation. That is, even if one of the processing units 101-103 fails during operation, one of the remaining two acts as the main processing unit to continue operation with the other as the slave. However, if two processing units fail, the 100 stops operation. If the main processing unit fails during operation by three processing units, one of the processing units that has been operating as a slave becomes the main processing unit to continue operation.

The software of the multiple system processor running in the processing units 101-103 generates railroad switch or signal control data in the format shown in FIG. 8(a).

In general, the railroad switch shifts a train in one of two directions (forward and backward). The software generates the data composed of bit string information, each bit indicating the shift direction of a railroad switch. For each signal, the software also generates bit string information, each bit indicating the red, yellow, or blue light of each signal. The bit string information is on when the control operation is to be executed and is off when the control operation is not to be executed. The 101-103 append a redundancy code to the data shown in FIG. 8(a) to create data in the format shown in FIG. 8(b). The redundancy code may be a parity code, CRC code, and so on. In addition, the 101-103 apply an encoding key, individually assigned to the interlocked logical unit, to the data shown in FIG. 8(b) to generate data in the format in FIG. 8(c). DES, one of widely accepted encryption methods, may be used as the encoding method. In the figure, a previously-prepared mask composed of a sufficient number of bits is shown to execute the bit-by-bit exclusive-OR operation.

Data in the form shown in FIG. 8(c), generated by the processing units 101-103, is collected by the main processing unit through the distributing wires 109-111. For example, the processing unit 101, if this is the main processing unit, collects data generated by processing units 102 and 103 and having the format shown in FIG. 8(c).

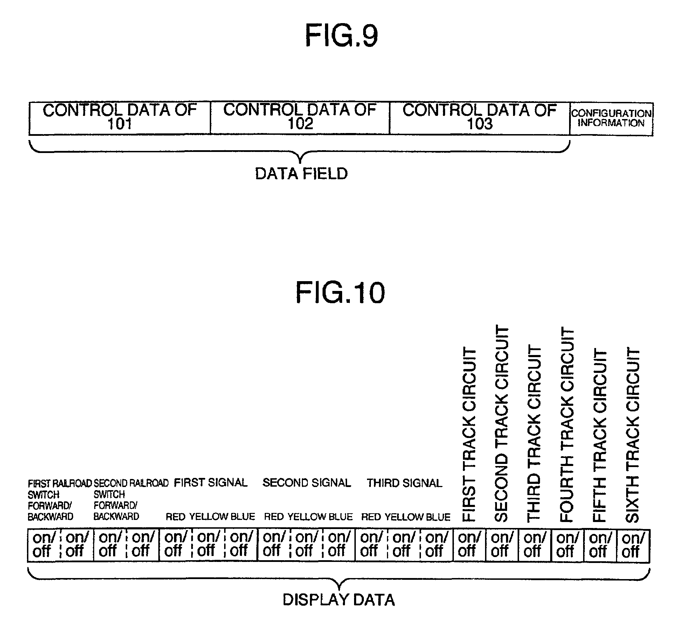

The main processing unit 101 uses the collected processing results to create data in the format shown in FIG. 9. The three data fields shown in FIG. 9 contain data processed (operated on) by the processing units 101-103 and having the format shown in FIG. 8(c). The configuration information field contains information on the operating status of the processing units 101-103. For example, when the processing unit 101 is failing and the processing units 102 and 103 are in operation, information indicating that "101: failing, 102: in operation: 103: in operation" is stored there.

The configuration information, though combined in this example, may be divided into separate pieces of information each indicating the operating status of each processing unit for each processing result.

Data in the format shown in FIG. 9 is transmitted from the processing unit 101 to the controller 107 via the line 121.

Conversely, data is received from the controller 107 as follows:

The main processing unit 101 receives data in the format shown in FIG. 10 from the controller 107 via the line 121. The format of each data field in FIG. 9 is as that shown in FIG. 8(c).

Next, the processing unit 101 sends, via the lines 109-111, the data of the data field to only the processing units that are in operation, according to the configuration information included in the format data shown in FIG. 9.

The processing units 101-103 receive data in the format shown in FIG. 8(c) via the lines 109-111 and decode it using the decoding key of each interlocked logical unit to generate data in the format shown in FIG. 8(b). During this processing, a check is made for the redundancy code. If an error is found, the message is discarded; if no error is found, the redundancy code is removed to generate data in the format shown in FIG. 8. Data in the format shown in FIG. 8 contains a bit string corresponding to information on railroad switches or signals as well as a bit string corresponding to information on track circuit status.

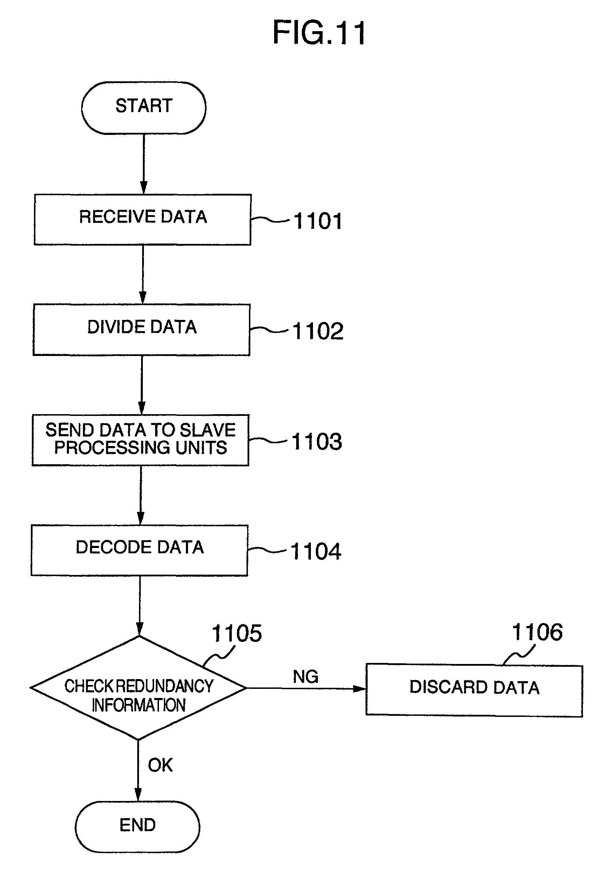

Referring to FIGS. 11-14, processing performed by the main processing unit and the slave processing units of the multiple system processor 100 will be described.

FIG. 11 shows the operation of the main processing unit 101 from the moment it receives from the controller 107 data required by the processing units to execute processing (operation) of the multiple system processor to the moment a control request is sent from the host system.

The main processing unit 101 receives data in the format shown in FIG. 8(c) from the controller 107 (step 1101). Then, based on configuration information included in the data, the main processing unit divides the data into two, data for the main processing unit and data for the slave processing units (step 1102), and sends the data for the slave processing units to the slave processing units (step 1103). After that, the main processing unit uses its own decoding key to decode the data for the main processing unit (step 1104) and checks the appended redundancy code to confirm the validity of the information (step 1105). If the information is not valid, the main processing unit discards the data (step 1106); if the data is valid, the main processing unit waits for a control request to be sent from the host system.

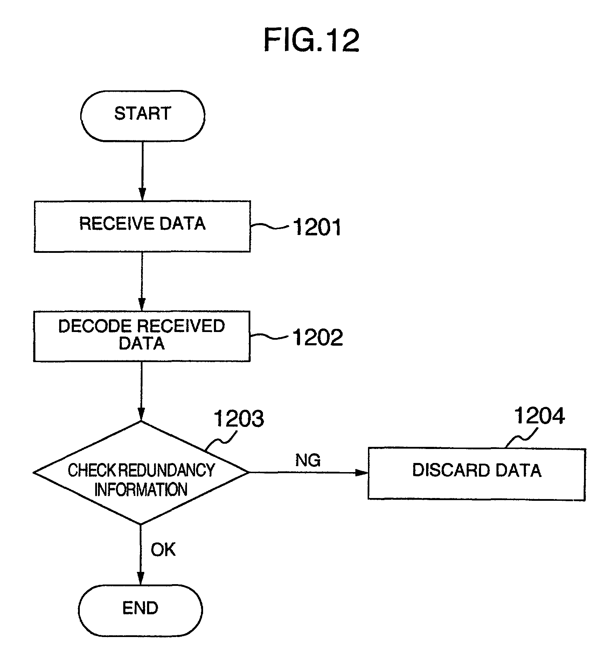

FIG. 12 shows processing performed for data sent from the main processing unit to a slave processing unit.

Each of the slave processing units 102 and 103 receives data from the main processing unit 101 (step 1201), uses the decoding key specific to the slave processing unit to decode the received data (step 1202), and checks the appended redundancy code to judge the validity of the data (step 1203). If the data is not valid, the slave processing unit discards the data (step 1204); if the data is valid, the slave processing unit waits for a control request to be sent from the host system.

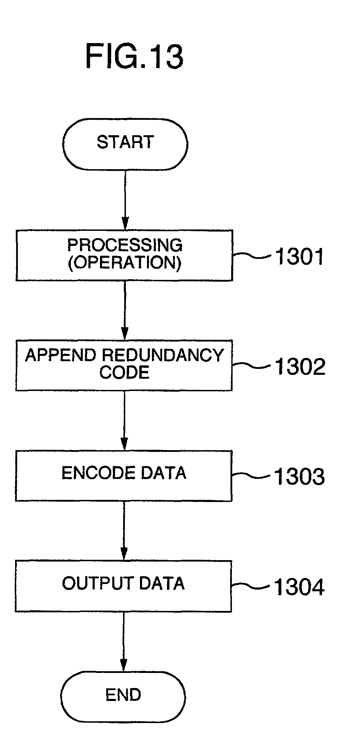

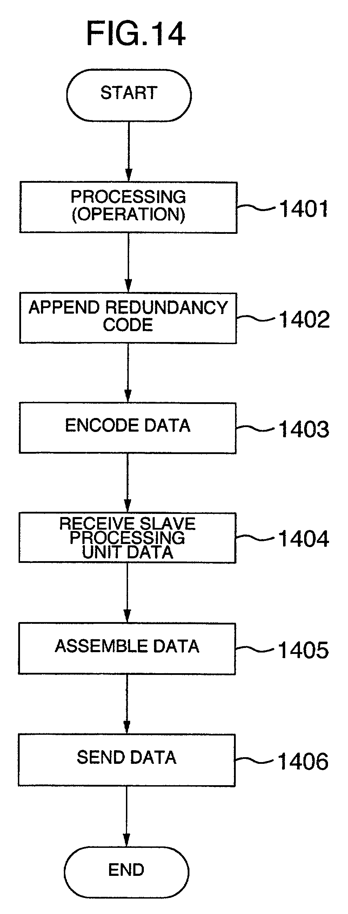

Next, referring to the flowcharts shown in FIGS. 13 and 14, processing will be described that is performed by the main processing unit 101 and slave processing units 102 and 103 when a control request is input from the host system to the multiple system processor 100.

FIG. 13 shows the flow of processing that is performed by a slave processing unit from the moment it receives a control request from the host system to the moment it sends a processing result to the main processing unit.

In response to a control request from the host system, a slave processing unit performs processing (operation) for the control request as described in FIGS. 2 and 3 (step 1301). The slave processing unit appends a redundancy code to the processing result (step 1302), uses the encoding key of the processing unit to encode data (step 1303), and sends the resulting encoded data to the main processing unit (step 1304).

FIG. 14 shows the flow of processing that is performed by the main processing unit from the moment it receives a control request from the host system to the moment it sends a processing result to the controller 107.

In response to a control request from the host system, the main processing unit performs processing (operation) for the control request as described in FIGS. 2 and 3 (step 1401) as with a slave processing unit. The main processing unit appends a redundancy code to the processing result (step 1402) and uses the encoding key of the processing unit to encode data (step 1403). After outputting the processing result of its own, the main processing unit receives the encoded processing results from the slave processing units (step 1404), assembles the processing results of the processing units generated for the control request received from the host system (step 1405), and sends the assembled processing results to the controller 107 (step 1407).

Even if one of the systems fails in a multiple system processor composed of three or more systems like the one described above, the processor may usually continue operation with the remaining systems. For example, if one system of three-system processor fails and the processor is working practically as a two-system processor, the operation may be continued safely if the two systems match in their outputs.

Although the multiple system processor 107 comprises three systems in the embodiment in the above description, the present invention may be applied to a multiple system processor comprising four or more systems. The present invention may also be applied to a two-system configuration, for example, by establishing priority so that the processing result of the main processing unit is honored in case of a tie in majority decision.

In the embodiment described above, data is encoded to prevent alteration when data is transferred among the processing units of a multiple system processor or between the multiple system processor and the controller. If there is no need for worrying about data alteration, data need not be encoded but the processing result may be directly transmitted.

In the embodiment described above, the controller 107 makes a decision by majority. It is also possible to employ an identity operation so that actual control operation becomes effective only if all data matches.

### INDUSTRIAL APPLICABILITY

The present invention gives the following effect in a communication between the multiple system processor and the controller without endangering safety.

The controller judges the processing results produced by the multiple system processor to generate a control instruction, thus reducing the execution time. In addition, the number of distributing wires between the multiple system processor and the controller is reduced, and the amount of wiring is constant even if the number of control points increases. Therefore, the multiple system processor may be applied to a large railroad station.

## Claims

1. A multiple system processor composed of a plurality of processing units each receiving the same input, performing the same processing, and producing and outputting a processing result,
wherein one of said plurality of processing units acts as a main processing unit with others as slave processing units, and
wherein said main processing unit comprises a collecting section which collects processing results of said main processing unit and said slave processing units and an output section which outputs the processing results collected by said collecting section.

2. The multiple system processor according to claim 1 wherein, when said collecting section collects the processing results from said plurality of processing units, said output section outputs the processing results at a time.

3. The multiple system processor according to claim 2 wherein, when processing results of normal processing units out of said plurality of processing units are collected, said collecting section outputs the processing results at a time.

4. The multiple system processor according to one of claims 1-3 wherein, when the processing results are output, said output section appends information on operating states of said plurality of processing units to the processing results.

5. The multiple system processor according to one of claims 1-4,
wherein each of said slave processing units encodes an output result thereof with an encoding key assigned thereto and outputs the encoded output to said main processing unit and
wherein said main processing unit encodes an output result thereof with an encoding key assigned thereto, combines the encoded processing results collected from said plurality of slave processing units with the encoded processing result of said main processing unit, and outputs the combined processing results at a time.

6. A controller connected to a multiple system processor wherein, when a plurality of processing results of processing units of said multiple system processor are sent at a time, said controller judges a majority or an identity of the plurality of received processing results and outputs a control instruction.

7. The controller according to claim 6 wherein, if the processing results sent from said multiple system processor are encoded, said controller decodes the received processing results using decoding keys, each corresponding to one of the processing units of said multiple system processor, and then judges the majority or the identity of data and outputs the control instruction.

8. A multiple system processing system comprising a multiple system processor composed of a plurality of processing units each receiving the same input, performing the same processing, and generating and outputting a processing result and a controller connected to said multiple system processor, said multiple system processing system comprising:
the multiple system processor wherein one of said plurality of processing units of said multiple system processor acts as a main processing unit with others as slave processing units and wherein said main processing unit comprises a collecting section which collects processing results of said slave processing units and said main processing unit and an output section which outputs the processing results collected by said collecting section; and
the controller which, when the processing results of the processing units of said multiple system processor are sent at a time, judges a majority or an identity of the plurality of received processing results and outputs a control instruction.

9. The multiple system processing system according to claim 8 wherein each processing unit of said multiple system processor has an encoding key for encoding the processing result thereof and outputs the processing result encoded with said encoding key to said controller and
wherein said controller has decoding keys each corresponding to one of the encoding keys of the processing units of said multiple system processor and decodes each of the processing results received from said multiple system processor with the corresponding decoding key.
